(19)

**Europäisches Patentamt**

**European Patent Office**

**Office européen des brevets**

(11) **EP 4 749 542 A1**

(12) **EUROPEAN PATENT APPLICATION**

(43) Date of publication:
**27.05.2026  Bulletin 2026/22**

(21) Application number: **24214755.1**

(22) Date of filing: **22.11.2024**

(51) International Patent Classification (IPC):
$G06Q\ 10/0631^{(2023.01)}$    $B60L\ 58/12^{(2019.01)}$
$B60L\ 58/16^{(2019.01)}$    $G06Q\ 10/08^{(2024.01)}$
$G06Q\ 10/20^{(2023.01)}$    $G06Q\ 50/40^{(2024.01)}$
$H02J\ 7/00^{(2026.01)}$    $G06F\ 119/06^{(2020.01)}$

(52) Cooperative Patent Classification (CPC):
**G06Q 10/20; B60L 58/12; B60L 58/16;**
**G06Q 10/0631; G06Q 10/08; G06Q 50/40;**
H02J 7/82; H02J 7/84

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Volvo Autonomous Solutions AB**
**405 08 Göteborg (SE)**

(72) Inventors:
* **SJÖBERG, Johan**
  **722 19 Västerås (SE)**
* **SKILLSÄTER, Calle**
  **644 36 TORSHÄLLA (SE)**

(74) Representative: **Kransell & Wennborg KB**
**P.O. Box 2096**
**403 12 Göteborg (SE)**

(54) **BATTERY-BASED AUTOMATED VEHICLE FLEET MISSION DISPATCHING**

(57)    A computer system (100) for automated assigning of transport missions to electric vehicles of a vehicle fleet (130) is provided, and configured to: for each (120-i) of a plurality of transport missions (120), obtain an expected degradation ($\Delta SoH_i$) of an energy storage system, ESS, (132-j) of a vehicle (130-j) if completing the mission; based on the obtained expected degradations, categorize each of the transport missions into one of several categories ($C_i \in \{C_1, C_2, ..., C_K\}$) of different expected degradation; for each vehicle and for each category ($C_k$), obtain an indication of a number ($M_{n,k}$) of missions belonging to the category and previously assigned to the vehicle, and based on said indications, assign the transport missions to the vehicles such that differences in numbers of missions of each category assigned to each vehicle, and/or in sums of expected degradations for all missions performed by each vehicle, are reduced or eliminated over time.

**Fig. 1**

**Description**

**TECHNICAL FIELD**

The disclosure relates generally to scheduling and dispatching of missions for electric autonomous vehicles (EAVs). In particular aspects, the disclosure relates to automating such scheduling and dispatching. The disclosure can be applied to heavy-duty vehicles, such as trucks, buses, and construction equipment, among other vehicle types. Although the disclosure may be described with respect to a particular vehicle, the disclosure is not restricted to any particular vehicle.

**BACKGROUND**

For battery-electric fleet vehicles used for transport missions, battery capacity may be considered an important factor to ensure both productivity and cost efficiency. The battery capacity is influenced by various factors such as how much of an available state-of-charge (SoC) window that is used between charges of the battery, and how much power that is used during the discharging cycles. Generally, it is desirable to achieve an even health-degradation of the batteries within the vehicle fleet, and to keep the batteries of the vehicles as capable as possible, something that is not always trivial for e.g. a site control system and/or mission planner/dispatcher responsible for scheduling and dispatching missions to the different vehicles.

The present disclosure aims at providing a solution that at least partially alleviates the above-mentioned difficulty.

**SUMMARY**

According to a first aspect of the disclosure, there is provided a computer system for automated assigning of transport missions to electric vehicles of a vehicle fleet. The computer system include processing circuitry, and the processing circuitry is configured to: for each of a plurality of transport missions, obtain an expected degradation of a (battery) energy storage system (ESS, or BESS) of a vehicle if completing mission; based on the obtained expected degradations, categorize each of the transport missions into one of several categories of different expected degradation; for each vehicle and for each category, obtain an indication of a number of missions belonging to the category and previously assigned to the vehicle; and, based on the indications, assign the transport missions to the vehicles such that differences in numbers of missions of each category assigned to each vehicle, and/or in sums of expected degradations for all missions performed by each vehicle, are reduced or eliminated over time. The first aspect of the disclosure may seek to solve the problem of how to achieve an even health-degradation of the batteries of the fleet vehicles. A technical benefit may include that by sorting the missions into different categories, and by making sure that over time the missions of each category is assigned evenly among the vehicles (such that each vehicle is eventually assigned an equal number of missions belonging to the category), an even battery-degradation among the vehicles is to be expected without the need for more complex, vehicle-specific models and dispatching algorithms, which reduces the computational burden required to obtain such a result. In addition, the envisaged solution enables to, in some examples, treat all vehicles equally in terms of expected degradation, which may further simplify the calculations involved and make available further processing power for other purposes.

Optionally, in some examples, including in at least one preferred example, a goal of the assignment may include, for each category, all vehicles performing, over time, an equal number of missions in that category. A technical benefit may include that as each vehicle will be assigned an equal number of e.g. more difficult missions, and an equal number of e.g. more easy missions, as each of the one or more other vehicles, the battery-health degradation of the vehicle's batteries is more likely to be more even compared to if e.g. assigning missions to the vehicles based on other factors, or even randomly. In same or other examples, the goal may include that each vehicle performs missions such that, over time, a total sum of expected degradation for each vehicle equals that of the other one or more vehicles of the fleet.

Optionally, in some examples, including in at least one preferred example, to estimate at least one of the expected degradations may include to estimate a required energy and one or more power requirements for the (corresponding) at least one mission to be assigned. A technical benefit may include that both required energy and power requirement (s) may serve as potential indicators of how much a vehicle's battery (or batteries) will degrade as a result of finishing the mission.

Optionally, in some examples, including in at least one preferred example, to estimate the at least one of the expected degradations may further include to estimate at least one of a maximum power requirement and power requirements at specific state-of-charge (SoC) levels, for the (corresponding) at least one mission to be assigned. A technical benefit may include that such estimations may further strengthen the accuracy of the estimated degradation, as maximum power requirement and power requirements at specific SoC levels may influence how fast the degradation occurs.

Optionally, in some examples, including in at least one preferred example, to estimate at least one of the expected degradations may include to use statistical data of one or more vehicles having already completed one or more missions same/equal or similar to the (corresponding) at least one mission to be assigned. A technical benefit may include that the expected degradation for a particular mission may thus be obtained by observing how much degradation that was caused for a vehicle previously performing a same or similar mission, which may eliminate or reduce the need of complex models for making predictions about such degradation.

Optionally, in some examples, including in at least one preferred example, the statistical data may include at least a required energy to complete the one or more equal/same or similar missions. A technical benefit may include that the required energy may serve as an indicator of the expected degradation caused by completing the mission.

Optionally, in some examples, including in at least one preferred example, the statistical data may further include historical weather conditions during completion of the one or more equal/same or similar missions. The processing circuitry may be further configured to obtain an indication of present or expected/predicted weather conditions for at least one of the missions to be assigned, and to obtain the expected degradation of the at least one mission based on the historical weather conditions and the present or expected weather conditions. For example, the processing circuitry may be configured to use the statistical data that was recorded for the most similar weather conditions as the indicated present or expected/predicted weather conditions for the mission, and a technical benefit may include that such historical data may thus be better at predicting the expected degradation than e.g. statistical data recorded until less or much less similar weather conditions.

Optionally, in some examples, including in at least one preferred example, the vehicles of the fleet may be of same or similar vehicle types. A technical benefit may include that the estimated degradation of a mission can thus be obtained by assuming a particular vehicle type used to perform the mission, and that such predictions/expectations may thus be more relevant for all vehicles equal to or similar to this particular vehicle type, which may help to better even out the degradation of the batteries of the vehicles over time.

Optionally, in some examples, including in at least one preferred example, to estimate at least one of the expected degradations may include to use one or more physical models of the vehicles. A technical benefit may include that the expected degradation may thus be obtained even if e.g. historical data recorded during previous completion of same or similar missions are not available.

Optionally, in some examples, including in at least one preferred example, to estimate at least one of the expected degradations may include to use one or more models of the batteries of the vehicles. A technical benefit may include that the predictions of the expected degradation for a particular vehicle and mission may thus be improved, by taking into account the internal workings/behavior of the vehicle's battery or batteries, e.g. in addition to the workings/behavior of the other parts of the vehicle (such as its tires, transmission, engines/motors, aerodynamic properties, and similar).

Optionally, in some examples, including in at least one preferred example, the vehicle fleet may be a fleet of autonomous electric vehicles (AEVs). A technical benefit may include that being able to obtain an even battery degradation for such vehicles may be particularly important, as AEVs may be expected to perform more missions than e.g. manually operated vehicles, and in that a wider range of battery degradation may occur if care is not taken to distribute/assign the missions to such vehicles in accordance with the solution of the present disclosure.

According to a second aspect of the disclosure, there is provided a (computer-implemented) method for automated assigning of transport missions to electric vehicles of a vehicle fleet. The method is performed by processing circuitry of a computer system, and includes: for each of the plurality of transport missions (that are to be assigned among the vehicles), obtaining the expected degradation of the ESS of the vehicle if completing the mission; based on the obtained expected degradations, categorizing each of the transport missions into one of the several categories of different expected degradation; for each vehicle and for each category, obtaining the indication of the number of missions belonging to the category and previously assigned to the vehicle; and, based on the indications, assigning the transport missions to the vehicles such that differences in numbers of missions of each category assigned to each vehicle, and/or in sums of expected degradations for all missions performed by each vehicle, are reduced or eliminated over time. The second aspect may thus seek to provide a method that solves the same problem as that of the first aspect, with the same technical benefits. Phrased differently, the method of the second aspect may be performed by the processing circuitry of the computer system of the first aspect.

According to a third aspect of the disclosure, there is provided an electric vehicle. The electric vehicle includes the computer system of the first aspect (or any example thereof envisaged herein). The third aspect may seek to solve the problem of providing the functionality of the computer system of the first aspect as part of a specific vehicle. A technical benefit may include that the vehicle may thus serve as a coordinating vehicle responsible for assigning transport missions to all vehicles of a fleet to which the vehicle of the third aspect belongs.

Optionally, in some examples, including in at least one preferred example, the vehicle may be an AEV, with a same technical benefit thereof as described above.

According to a fourth aspect of the disclosure, there is provided a fleet of electric vehicles. The fleet includes the computer system of the first aspect (or any example thereof envisaged herein) and the electric vehicles. The fourth aspect may seek to solve a problem of how to provide a fleet of vehicles, and how to achieve a more even degradation of the vehicle's batteries as described above, with the same technical benefits.

Optionally, in some examples, including in at least one preferred example, at least one of the vehicles may be an AEV, with the same technical benefit thereof as described above.

Optionally, in some examples, including in at least one preferred example, the computer system may be provided as part of one of the electric vehicles. A technical benefit may include that a need for a stationary entity is thus eliminated, that may be beneficial if e.g. the vehicles operate in areas not suitable for using such a stationary entity.

Optionally, in some examples, including in at least one preferred example, the computer system may be provided distributed among two or more of the electric vehicles, e.g. such that each vehicle (and a computer system thereof) performs part of the overall solution envisaged herein in a distributed manner. A technical benefit may include that the solution may be made more flexible, and that a single point of failure is avoided. In some examples, at least one vehicle may serve as a coordinating vehicle, while one or more other vehicles may serve as followers instead.

According to a fifth aspect of the disclosure, there is provided a computer program (and computer program product), including program code for performing, when executed by the processing circuitry, the method of the second aspect (or any example thereof envisaged herein).

According to a sixth aspect of the disclosure, there is provided a computer-readable storage medium including instructions that, when executed by the processing circuitry, cause the processing circuitry to perform the method of the second aspect. The sixth (as well as the fifth) aspect may seek to solve the problem of how to logistically provide the solution as envisaged herein to e.g. computer systems and processing circuitry. In some examples, the storage medium may be a non-transitory computer-readable storage medium.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

## BRIEF DESCRIPTION OF THE DRAWINGS

Examples are described in more detail below with reference to the appended drawings.

    **FIG. 1** schematically illustrates various examples of a computer system, according to examples of the present disclosure.

    **FIG. 2** schematically illustrates a flowchart of various examples of a (computer-implemented) method, according to examples of the present disclosure.

    **FIG. 3** schematically illustrates various examples of an electric vehicle, according to examples of the present disclosure.

    **FIGS. 4A** and **4B** schematically illustrate various examples of a fleet of electric vehicles, according to examples of the present disclosure.

    **FIG. 5** is a schematic diagram of an exemplary computer system for implementing examples disclosed herein, according to an example.

## DETAILED DESCRIPTION

The detailed description set forth below provides information and examples of the disclosed technology with sufficient detail to enable those skilled in the art to practice the disclosure. The present disclosure seeks to provide an automated solution for assigning transport missions among a plurality of vehicles, in a way that evens out degradation of vehicle batteries/ESSs over time.

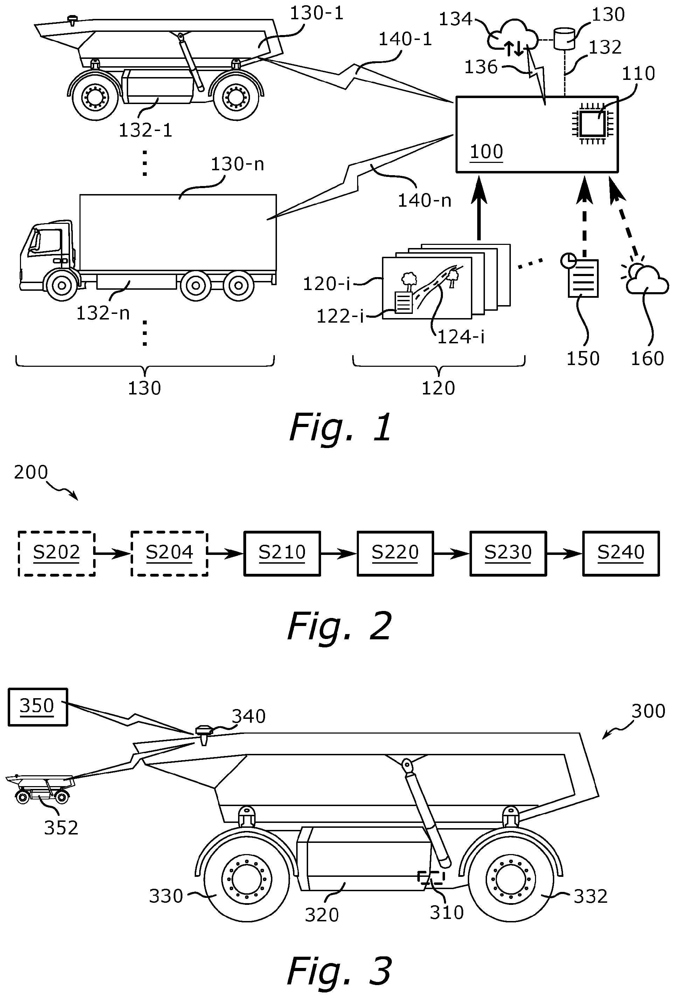

**FIG. 1** schematically illustrates various examples of a computer system 100 for automated assigning of transport missions as envisaged herein. The computer system 100 includes processing circuitry 110.

**FIG. 2** schematically illustrates a flowchart of various examples of a (computer-implemented) method 200 for automated assigning of transport missions as envisaged herein, such as performed by the processing circuitry 110 of the computer system 100.

The processing circuitry 110 is configured to obtain, for each of a plurality 120 of transport missions and as part of e.g. an operation S210 of the method 200, an expected degradation (e.g., an expected change in state-of-health, $\Delta SoH_i$) of an ESS of a vehicle if completing (i.e. if the vehicle was to complete) the mission. Phrased differently, if there are transport missions $TP_1$ to $TP_I$, where $I$ is an integer indicating a total number of missions that are to be distributed, the processing circuitry 110 obtains an expected degradation $\Delta SoH_i$ (with i $\in [1, I]$) for each $i$-th such mission. To obtain the expected degradation for each vehicle, a same degradation profile assumed common to all vehicles may be used, to simplify the involved calculations. In other examples, the degradation profile may differ for different vehicles.

The processing circuitry 110 is further configured to, based on the obtained expected degradations and as part of e.g. an operation S220 of the method 200, categorize each of the transport missions into one of several categories of different expected degradation. For example, there may be categories $C_1$, $C_2$, ..., $C_K$, where $K$ is an integer indicating a total number of such categories, and each category corresponds to a different amount or interval of degradation. For example, each category $C_k$ may correspond to a degradation in the

interval $[\Delta SoH_{lower,k}, \Delta SoH_{upper,k})$, where $\Delta SoH_{lower/upper,k}$ are lower and upper limits, respectively, of the k-th category $C_k$. The categories and their interval may be non-overlapping, and e.g. such that $\Delta SoH_{upper,k} = \Delta SoH_{lower,k+1}$ or similar. For example, each category may also be assigned a suitable name/label depending on how much degradation it corresponds to, such as e.g. "little degradation" (or "easy"), "moderate degradation" (or "medium"), "much degradation" (or "hard"), and similar. Consequently, if the expected degradation for an *i*-th transport mission $TP_i$ is obtained as $\Delta SoP_i$, the corresponding category into which this mission is to be categorized may be the category $C_k$ where $\Delta SoH_{lower,k} \leq \Delta SoP_i < \Delta SoH_{upper,k}$, or similar. After having performed operation S220, each transport mission is thus categorized by the processing circuitry 110 into one of the categories $C_1, C_2, ..., C_K$.

The processing circuitry 110 is further configured to, for each vehicle and for each category and as part of e.g. an operation S230 of the method 200, obtain an indication of a number (e.g. a number $M_{n,k}$) of missions belonging to the category and previously assigned to the vehicle. Phrased differently, for each n-th vehicle (where $n \in [1, N]$ and $N$ an integer indicative of a total number of vehicles in the fleet) and for each *k*-th category, the processing circuitry 110 obtains a number $M_{n,k}$ indicative of how many missions belonging to category $C_k$ that the *n*-th vehicle has previously performed. If there are e.g. $N$ vehicles in total, and a total of $K$ different categories, the processing circuitry 110 may for example calculate (or otherwise somehow obtain) a set of $N \times K$ such numbers $M_{n,k}$, i.e. $\forall n \in [1, N], k \in [1, K]$.

The processing circuitry 110 is further configured to, based on the indications and as part of e.g. an operation S240 of the method 200, assign the transport missions $TP_1, ..., TP_M$ to/among the vehicles such that differences in numbers of missions of each category assigned to each vehicle are reduced or eliminated over time. For example, if the processing circuitry 110 determines that for a mission $TP_i$ categorized into category $C_k$, $M_{n',k} < M_{n,k}$ (or possibly $M_{n',k} \ll M_{n,k}$), where $n' \in [1, N]$ and $n' \neq n$, the processing circuitry 110 may try to increase $M_{n',k}$ and thus make the difference smaller by assigning mission $TP_i$ to vehicle $n'$ instead of to some other vehicle. As one example, the processing circuitry 110 may calculate, for each category $C_k$, a number of missions of that category that has one average been assigned to any vehicle. For example, the processing circuitry 110 may calculate, for each category, a number

$$\widetilde{M}_k = \frac{1}{N} \sum_{n=1}^{N} M_{n,k},$$

and then assign a mission in category $C_k$ to the vehicle that has not yet been assigned any mission and for which $M_{n,k}$ is smallest compared to $\tilde{M}_k$, thus causing sort-of a reversion to the mean over time. As used herein, terms such as "numbers of mission" and "all missions performed" refers to momentary, accumulated counts of missions at the time the missions are assigned to the vehicles.

As another example, the processing circuitry 110 may consider (as part of operation S240) one vehicle at a time, and see how many missions in each category the vehicles has previously been assigned/performed. The processing circuitry 110 may then select, out of the missions that are to be assigned as part of operation S240, a mission belonging to a category for which the vehicle has been previously assigned/performed fewer missions compared to others. As an alternative, the processing circuitry 110 may also check, before assigning a particular mission to a particular vehicle, whether there are any other vehicle for which the number of assigned/performed missions of the corresponding category are even fewer, and then instead assign the mission to this other vehicle instead.

As yet another example, the processing circuitry 110 may process the missions to be assigned in an order corresponding to their expected "difficulty" in terms of expected degradation. For example, the processing circuitry 110 may start with missions $TP_i$ of e.g. the hardest category for which there are currently any mission to assign (e.g. $C_K$, if $\Delta SoC_{lower,K} > \Delta SoC_{higher,K-1}; \Delta SoC_{lower,K-1} > \Delta SoC_{higher,K-2}$, etc.), and then assigns these such that they are assigned to vehicles that have performed the fewest missions in this category compared to other vehicles. The processing circuitry 110 may then continue with the missions in the next category for which there are currently any mission to assign, e.g. $C_{K-1}$, and assign these missions to vehicles that have not yet been assigned any missions and for which the number of previous missions in this category are lower than that of the other vehicles, etc., until each mission has been assigned to one vehicle. In general, as indicated above, the processing circuitry 110 may have many options for how to exactly each mission is to be assigned, but should operate such that over time, the differences between $M_{n,k}$ and $M_{n',K}$ for any $n' \neq K$ and any $K \in [1, K]$ are reduced or eliminated. In particular, the processing circuitry 110 may for example primarily attempt to reduce the differences for *k*'s that indicate more difficulty categories, as the missions in these categories will likely result in more ESS degradation per mission than missions in other categories. In summary, using the terminology and notation introduced above, the goal of the processing circuitry 110 is to, with time, arrive at a distribution of missions assigned such that

$$M_{n,k} \approx (or =) M_{n',k}$$

for any $n' \neq n$ and for any $k$, as this will likely correspond to a more even degradation among the different ESSs of the vehicles, as it may be assumed that the health state $SoH_n$

for the n-th vehicle can be approximated as

$$SoH_n \approx \sum_{k=1}^{K} M_{n,k} \times \delta SoH_k,$$

where $\delta SoH_k$ is e.g. an average degradation of health caused by performing a mission belonging to category $k$, e.g. such that $\delta SoH_k = (\Delta SoH_{upper,k} - \Delta SoH_{lower,k})/2$ or similar. By attempting to make $M_{n,k}$ the same for all $n$ (even though $M_{n,k}$ may not necessarily be the same for all $k$), the terms $SoH_n$ are thus expected to become approximately equal (or at least more similar) with time, due to the assigning of transport missions performed by the processing circuitry 110 as part of performing the method 200.

As envisaged herein, the vehicle fleet for which the computer system 100 is responsible to assign missions may for example be a fleet 130 of vehicles 130-1, ..., 130-n, (and up to 130-N, although FIG. 1 to avoid cluttering only illustrates two vehicles 130-1 and 130-n), where the vehicles in the fleet 130 may be of equal type or of mixed type. For example, a vehicle 130-1 may be an autonomous electric vehicle (such as the applicant's own TA15 autonomous electric dumper, or similar), while another vehicle 130-n may instead be a manually driven vehicle such as an electric box-cargo truck, or similar. As envisaged herein, there may be benefits from operating a fleet of same or at least substantially same vehicle type, as obtaining the expected degradation for a mission may be easier and more accurately apply for all vehicles in the fleet. However, as envisaged herein, the proposed solution may apply also for a fleet of non-homogenous vehicles such as shown in FIG. 1. As will be described further below, the expected ESS degradation for a particular mission, e.g. $\Delta SoH_i$ may be considered the same for all vehicle types, or different expected degradations may be obtained for different vehicles for a same mission, i.e. such that $\Delta SoH_i[n]$ is made vehicle-dependent, or similar. Making the expected degradation vehicle- (or vehicle type-) dependent may however require more complex analysis than if considering $\Delta SoH_i$ to be the same for all vehicles, and based e.g. on a most common type of vehicle within the fleet 130 or based on some standardized vehicle type, or similar.

The processing circuitry 110 and computer system 100 may be configured to communicate with the vehicles in the fleet 130 via e.g. wireless radio-links, such as 140-1 and 140-n, or similar. Such links may for example be used to communicate the assigned routes to the vehicles of the fleet 130, and/or to obtain data from the vehicles 130 in order to gather historical statistics/data as will be described in more detail further below.

The processing circuitry 110 may be configured to receive the plurality 120 of transport missions that are to be assigned e.g. from a database/external storage 130, from a cloud-based service 134, or similar, with which the processing circuitry 110 and computer system 100 may communicate using one or more wired 132 and/or wireless links 136. Of course, communication with the vehicles of the fleet 130 may instead, or in addition, be performed via e.g. the cloud-based service 134, in which case the processing circuitry 100 does not need to have direct radio-links such as 140-1 and 140-n established with the vehicles of the fleet 130. For example, the processing circuitry 110 and computer system 100 may e.g. push information (such as assigned routes) to the vehicles of the fleet 130 via the cloud-based service, and/or the vehicles of the fleet 130 may poll such information from the cloud-based service by e.g. polling the latter in a repeated fashion and/or upon receiving a signal that new information is ready to be obtained from the cloud-based service 134. In some examples, the cloud-based service 134 and/or the external storage 130 may be implemented as part of/by the processing circuitry 110 and/or computer system 100 itself.

Each mission 120-i of the plurality 120 of missions to be assigned may for example include a route 124-i that is to be driven (defined by coordinate waypoints and/or by other coordinates, or similar), as well as other information 122-i pertinent to the mission, such as an expected weight of the cargo to be transported, geographical and/or topographical data indicative of e.g. hills, flat sections, surface types (such as gravel, mud, snow, ice, dirt, etc.), other surface conditions (such as wetness, muddiness, iciness, etc.) of the road along which the vehicle performing the mission is to be driven, and similar.

Based on e.g. the information 122-i and/or 124-i, the processing circuitry 110 may for example be configured to estimate a required energy $E_{est,i}$ and one or more power requirements $P_{est,i}$ for each $i$-th mission, and then use this information to find the expected corresponding ESS degradation $\Delta SoH_i$.

In other examples, the processing circuitry 110 may be further configured to estimate at least one of a maximum power requirement $P_{estmax,i}$ and power requirements at specific state-of-charge (SoC) levels, e.g. $P_{est,i}[SoC]$ for each $i$-th mission, and then use this (additional) information as part of finding the degradation $\Delta SoH_i$.

In other examples, instead of or in addition to the above, the processing circuitry 110 may be configured to obtain statistical data 150 (e.g. from the database 130 and/or cloud-based service 134, and/or from the vehicles of the fleet 130 themselves), wherein this statistical data 150 has been recorded for one or more vehicles that has already completed same or similar missions as those 120 that are to be assigned. For example, statistics may be collected about an actual degradation, required energy, required power, etc., as calculated or even sensed during completion of the previous missions, and this information may be used to estimate the expected degradation for each of the missions 120 that are to be assigned. For example, the statistical data 150 may include at least required energy $E_{req,i}$ (as previously calculated or measured using one or more suitable sensors) for previously completed same or similar missions as those 120 to be assigned, and/or similar recordings of required power, maximum power, required power at different SoC levels, and similar. Using statistical data 150 may be helpful e.g. in that the need to predict such values for the missions 120 that are to be assigned is made easier. For example, if one or more vehicles have already completed a same or similar mission as one that is to be assigned, statistics from these previously completed one or more missions may be used to obtain the expected values for the mission to be assigned. For example, an average energy required to complete a same or similar type of mission may be used as the expected energy to complete the mission to be assigned; an average ESS degradation caused by performing the previous one or more missions may be used as the expected ESS degradation for the mission, and similar for power requirements, maximum power, and/or power requirements for different SoC levels. If not having recorded values for one or more of these parameters directly, it is envisaged that the statistical data 150 may in some examples include values of one or more other parameters from which these parameters of interest may be calculated/derived, or similar.

In some examples, as part of e.g. the data 150 or as separate data, the processing circuitry 110 may also be configured to receive historical weather conditions during completion of the one or more same or similar missions, and to obtain an indication of present or expected weather conditions 160 for at least one of the missions to be assigned. The processing circuitry 110 may then obtain the expected degradation of the at least one mission based on the historical weather conditions and the present or expected weather conditions 160. For example, the data 150 may include recordings of e.g. degradation, required energy, power requirements, etc., for multiple completions of a same route and for different weather conditions (such as different air temperature, road temperature, wind speed, wind direction, humidity, etc.). When attempting to estimate the degradation for a mission similar or equal to that recorded in the data 150, the processing circuitry 110 may then use the part of the historical data 150 that was recorded for weather conditions that most similarly equals or approximates the current or predicted conditions, e.g. by direct matching and/or by interpolation and/or extrapolation techniques, and similar. For example, if historical data is available for a particular mission type both in cold and warm conditions, for both light and strong window, for different wind directions, and similar, a part of the historical data is most similar to current weather conditions can be used by the processing circuitry 110 in order to obtain the estimated degradation for completing the mission that is to be assigned.

In some examples, the historical data 150 may also include different recordings for different missions and for different vehicle types, and the processing circuitry 110 may then use the data belonging to a vehicle type most reminiscent of e.g. the vehicle types of the fleet 130 and/or of a particular vehicle type of the fleet 130, and similar.

In some examples, obtaining the historical/statistical data 150 may be performed as part of an (optional) operation S202 of the method 200.

In some examples, obtaining the current or predicted weather conditions 160 may be performed as part of an (optional) operation S204 of the method 200.

In some examples, the processing circuitry 110 may instead, or in addition, of/to historical data 150 use one or more physical vehicle models in order to estimate what the ESS degradation would be for completing a particular transport mission that is to be assigned. This may serve as a complement to historical data 150, or even as a substitute to such data in case such historical data is not available or reliable, e.g. if the historical data 150 has been recorded only for very different types of missions and/or for very different types of vehicles, such that using only the data 150 would thereby introduce undesired levels of inaccuracy in the predictions/estimations of the degradation.

Over time, the processing circuitry 110 may in some examples be configured to reiterate at least operations S210, S230 and S240 for each new batch of transport missions that are to be assigned. In other examples, the processing circuitry 110 may be configured to assign more missions than there are vehicles in a same operation S240, i.e. such that one or more vehicles are each assigned more than one mission within a single iteration of the operations. How many missions that are assigned during each iteration is of course not that important, as long as the processing circuitry 110 continues to attempt to assign the missions in a way that will reduce imbalances of ESS/battery degradation over time as described herein.

As one example, in order to estimate a required energy for a specific mission (e.g. a given a specific route that is to be driven, a given starting point and destination point, a speed profile, and e.g. by taking environmental and/or vehicle-specific conditions such as wind speed, wind direction, road topology such as slope and inclination, rolling resistance, vehicle weight/cargo, and similar, into account), the processing circuitry 110 may for example model the resistance given the environmental and/or vehicle-specific conditions. For example, one such model may be defined as

$$m\dot{v} = F_d - mg\sin(\alpha) - k_{roll}v - k_{air}v^2,$$

where $m$ is the vehicle (or vehicle combination, which herein is also encompassed by the term "vehicle") mass, $v$ the vehicle speed forward, $\dot{v}$ the acceleration, $\alpha$ the slope/inclination of the road, $k_{roll}$ a rolling resistance coefficient and $k_{air}$ an air-drag/-resistance coefficient. The parameter $F_d$, the force required to drive the vehicle under such momentary conditions, may then be expressed as

$$F_d = m\dot{v} + mg\sin(\alpha) + k_{roll}v + k_{air}v^2,$$

and using this model and a particular, given, speed profile v(t) (e.g. expected speed as a function of time t), the required energy to complete the mission may be approximated by integrating the force over time, i.e. as

$$E_{req,i} = \int F_{d,i}(t)v_i(t)dt,$$

where $v_i(t)$ is the speed profile for the $i$-th mission and also used in the expression for $F_{d,i}(t) = F_d(v_i(t))$.

As already mentioned herein, another example includes for the processing circuitry 110 and computer system 100 to learn from previous travels, e.g. by creating (either directly or by receiving such data from other entities, such as a vehicle if the processing circuitry 110 and computer system 100 do not form part of the vehicle) a database of how much energy that has been required to go from the starting point to the destination in different kinds of weather conditions, and similar.

In some examples, the processing circuitry 110 may further also estimate battery impacting properties of the route of the mission, such as the maximum power requirement, power requirement at specific SoC values, and similar. This may be done in similar ways as those mentioned above, i.e. based on one or more battery models and/or based on historical data. For example, a required power at each time instance may be obtained as

$$P_i(t) = F_{d,i}(t)v_i(t),$$

and the processing circuitry may analyze such a parameter to compute e.g. the maximum required power $P_{reqmax,i} = \max_t P_i(t)$. The processing circuitry 110 may in some examples further combine such information with a battery energy model, in order to compute e.g. the SoC levels that will be present at different places along the mission route in order to see what power that is needed at which SoC level. Examples of battery energy models as envisaged herein are for example disclosed in "A Critical Review on Battery Aging and State Estimation Technologies of Lithium-Ion Batteries: Prospects and Issues" by Probir Kumar Roy et al., Electronics 2023, 12(19), 4105 (https://doi.org/10.3390/electronics12194105).

In some examples, the processing circuitry 110 may instead, or in addition, be configured to obtain e.g. logged power levels and/or SoC levels for one or more previous missions, and to use this information to estimate such levels for a mission that is to be assigned.

In general, the solution as envisaged herein may be particularly useful if the vehicles of the fleet 130 are of a same or similar vehicle type, and if such a same or similar vehicle type is also used when estimating the ESS degradation caused by each mission to be assigned. It is, however, envisaged to apply the proposed solution also for non-homogenous vehicle fleets, as some benefits may still remain, including the possibility to avoid using more complex models to more exactly estimate degradation and similar for each vehicle type, and instead just dividing the missions to be assigned into the plurality of different categories and then attempting to make sure that the vehicles will be assigned as similar total numbers of missions of each category as possible. In other envisaged examples, they vehicles of the fleet 130 may not necessarily be of a same or similar vehicle type. In such a case, the type of vehicle may also be taken into account when assigning the missions from the different categories. For example, a heavier vehicle may suffer more degradation than a lighter vehicle when performing a same mission, as the heavier vehicle may require more battery drain and thereby increased aging in order to e.g. climb uphill. As another envisaged solution, how to categorize the missions may be different for each vehicle type. For example, each vehicle may be associated with a same plurality of categories, but which missions that belong to each category may be different for each vehicle. For example, a mission categorized as "hard" or "difficult" (etc.) for one vehicle type may instead be categorized as "medium" or "moderate" (etc.) for another, different vehicle type, and so on. Phrased differently, it may be taken into account that a particular mission may be considered to correspond to different levels of difficulty (i.e. expected degradation) for different vehicle types.

In fact, as envisaged herein, categorizing missions into different categories may be particular simple, if assuming e.g. that an expected degradation of a mission is e.g. proportional to one or more of a route length, a total change of altitude, a total amount of climbing, an average required speed, a required loading of the vehicle, an expected ambient and/or road temperature, and similar, for the mission. For example, each mission may be classified and categorized based only one e.g. its length (either in distance and/or time), based only on its length and total climbing, based only on its length, total climbing and required average speed, its loading, and/or based on any combination of such features of the mission. By so doing, there is no need to calculate any exact required energy, exact required maximum power, etc., for each mission, and the missions can instead be categorized based on parameters such as length, speed, etc., that are easier to obtain. This may be particularly useful in reducing the amount of computing power needed for assigning the missions, and it is assumed that, at least on average, such a solution may help to even out the ESS degradation as each vehicle will be assigned a same number of missions in a particular category as all other vehicles. Phrased differently, as envisaged herein, the phrase "obtaining an expected degradation" or similar may in some examples mean that we do not calculate or attempt to calculate an exact such degradation, but only categorically estimate whether the degradation is e.g. low, medium or high based on one or more easily obtainable (and often already available) parameters of the mission itself, such as its length, required climbing, required average speed, number of steep hills, air and/or road temperature, required vehicle loading, etc. For example, the processing circuitry 110 may be configured to perform the estimation/obtaining of expected degradation by implementing a categorizing function F, that takes as input a set of one or more parameters $\Lambda_i$ of a particular *i*-th mission, a set of degradation categories, and then outputs a category index indicating to which of the categories the mission belongs, e.g. such that

$$F(\Lambda_i, \{C_1, C_2, \ldots, C_K\}): i \to k.$$

In the above, the set of parameters $\Lambda_i$ may for example include one or more of route length $L_i$; route total climbing $TC_i$; route average speed $\bar{v}_i$, road and/or air temperature $T_{road}$ and $T_{air}$, and similarly as described above.

**FIG. 3** schematically illustrates one or more examples of a vehicle 300 as also envisaged herein, here in form of an autonomous electric dumper. The dumper 300 includes computer system 310 that may be the computer system 100 described earlier herein, or any other computer system configured to perform the method 200. The dumper 300 has an ESS 320 that provides power for an electric traction responsible for providing torque to one or more wheels 330 and 332 of the dumper 300, such that the dumper 300 is propelled using electric power instead of e.g. an internal combustion engine (ICE). A vehicle such as the dumper 300 may be considered as an AEV, and may form part of a fleet of AEVs as envisaged herein. The dumper 300 may include communication means 340 such as an antenna for transmitting and/or receiving radio signals, such that the 300 may communicate with one or more other vehicles 352 of the fleet and/or with a centralized controller 350. In this example, it is envisaged that the vehicle 300 may perform assigning of transport missions for e.g. itself and for other vehicles of the fleet, and e.g. act as a coordinating/controlling vehicle in this regard.

For example, the dumper 300 may receive one or more missions that are to be assigned e.g. from the node 350 and/or from some other vehicle 352, and then assign the missions to the vehicles of the fleet using the method 200 as described herein. Although here illustrated as a dumper, the envisaged vehicle may of course be any type of vehicle that is used as part of a fleet to perform transport missions, such as trucks, buses, marine vessels, articulated haulers, wheel loaders, semitrailers, tractor plus trailer combinations, and similar, assuming these are electric vehicles for which a need to even out ESS degradation among the vehicles is desirable.

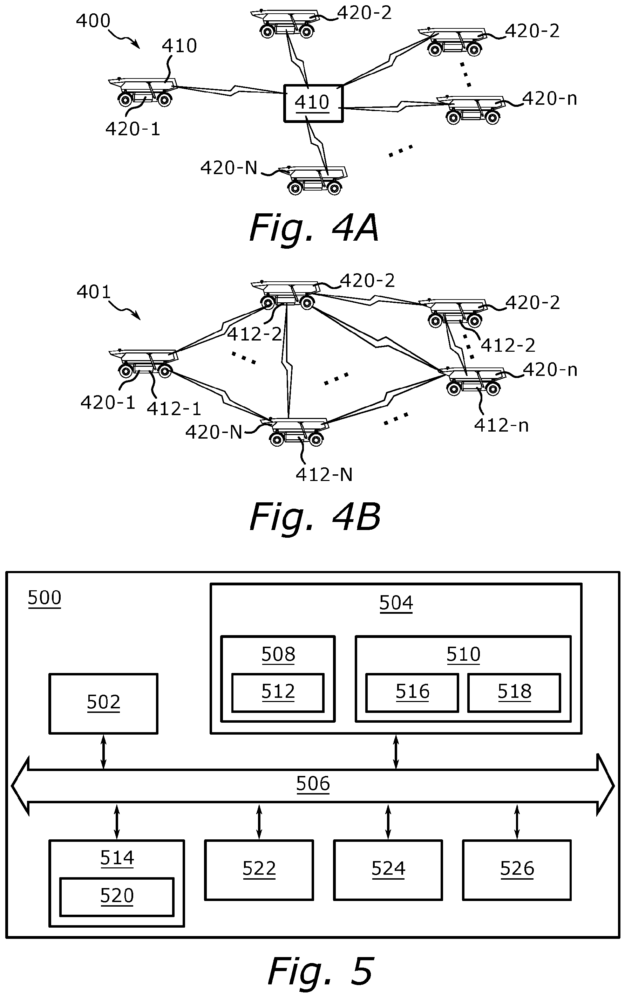

**FIG. 4A** schematically illustrates one or more examples of a fleet 400 of electric vehicles as envisaged herein. In this particular example, the fleet includes *N* such electric vehicles 420-1, 420-2, ..., 420-n, ..., 420-N. In this example, a central, stationary node 410 is responsible for assigning transport missions to the fleet vehicles, and includes a computer system as envisaged herein, such as the computer system 100 described with reference to FIG. 1 for performing the method 200 described with reference to FIG. 2. In some examples, the node 410 may not be stationary, and e.g. instead form part of/be implemented by one of the vehicles, such as 420-1. For example, such a vehicle may be the vehicle 300 described with reference to FIG. 3, that includes the computer system 310 for performing the method 200. The vehicle 420-1 responsible for implementing the computer system and for performing the method 200 may communicate with the other vehicles via e.g. a central node, or e.g. by communicating directly with each of the other vehicles and/or via a mesh configuration where each vehicle is responsible for communicating only with one or more nearby vehicles and configured to relay information among the vehicles as needed.

**FIG. 4B** schematically illustrates one or more other examples of a fleet 401 of electric vehicles as envisaged herein. Here, there is no central coordinator entity, and the vehicles 420-1 to 420-N (or at least some of the vehicles 420-1 to 420-N) instead implements the envisaged computer system in a distributed fashion, such that each vehicle 420-n is responsible for implementing a part 412-n of the computer system. For example, each vehicle may be responsible for determining its own number of previously assigned missions for each category, to estimate its own expected degradation if performing each mission, and similar, and may coordinate such data among all the vehicles as required to obtain an optimal distribution/assignment of the missions that are to be assign, that provides a decrease/equalization of such numbers over time as envisaged and described herein. The vehicles 420-1 to 420-N may implement such a distributed computer system by communicating directly with each other, or in a mesh-like fashion, as long as information may be propagated among the vehicles as required. As part of implementing the computer system and performing the method as envisaged herein, the vehicles may for example perform voting or similar proceedings in order to agree upon an optimal assignment of the missions among the vehicles. In other examples, one of the vehicles may assume the role of a coordinator and the other vehicles may assume roles as followers, and it may be up to the coordinator to e.g. collect information (such as numbers of previously assigned missions in each category, estimated degradations for each mission for each vehicle, and similar), and to then make a final decision on how to assign the missions. Other examples are of course also possible, and also envisaged herein as long as such examples result in the desired equalization over time. For example, a distributed solution may include each vehicle communicating how many missions it has performed in each category to all other vehicles, or at least to all vehicles with which the vehicle can communicate. For example, each vehicle can communicate that it has performed A missions of a first category, B missions of another category, C missions of yet another category, etc. When receiving such information, another vehicle may then compare these numbers with its own numbers, and decide e.g. that in order to catch up with the other vehicles, the vehicle needs to perform more missions in one or more particular categories. For example, if a vehicle receives information that it has performed fewer missions in a particular category A, compared to the other vehicles, the vehicle may decide (and communicate) that it is to perform at least one mission of category A to decrease the overall differences. As another example, as part of said categorization and assigning of missions, each mission may be associated with a particular cost value for performing the mission, where the cost value may or may not be different for different vehicle types. Each vehicle may then calculate a sum of costs associated with the missions it has already performed, and broadcast this sum of costs to all (or at least some of) the other vehicles. After knowing about the sum of costs for the other vehicles, a vehicle can then make (and broadcast) a decision about which mission (i.e. in which category) it needs to perform next in order to make its own sum of costs more equal to those of the other vehicles, e.g. more equal to an average of all vehicle's sum of costs, or similar.

As yet another example as envisaged herein, each category may correspond to a certain cost value (in terms of degradation) or span of such cost values, i.e. "categorizing" missions may be equal to assigning such a cost value to each mission and then grouping the missions based on these cost values. As mentioned earlier herein, the cost value for each mission may be different for different vehicle types. The cost value may correspond to or be the expected degradation. For example, for each $i$-th mission, a cost value $c_i$ may be defined, and a category $C_k$ may be defined to include all missions having a cost value equal to $\overline{c}_k$ or in a range $\overline{c}_{k,low}$ to $\overline{c}_{k,high}$, where $\overline{c}_k$. In some examples, the vehicle type may also be taken into account. For example, for a $l$-th vehicle type, the cost for performing mission $i$ may be defined as $c_{i,l}$, and be the same or different for different vehicle types. Each vehicle may e.g. calculate a sum of costs for all missions it has previously performed, and then compare this sum to those of the other vehicles (or to at least some of the other vehicles). If a vehicle has a lower sum of costs than other vehicles (e.g. than an average of the sum of costs of other vehicles), the vehicle may be assigned more missions with higher costs in order to decrease the difference vis-à-vis the other vehicles faster, and vice versa.

In other examples, the vehicles may not necessarily aim to perform an equal number of missions for a category as the other vehicles, but instead aim at obtaining a same sum of costs as the other vehicles. For example, if one vehicle has performed one easy and one difficult mission, another vehicle may obtain the same sum of costs by e.g. performing two moderate missions instead, if the determined mission costs so allow. For example, performing one mission with cost score "1" and another mission with cost score "3" may result in the same sum of costs as performing two missions both with cost score "2", and similar. Phrased differently, as envisaged herein, the most important thing is that the expected degradation of each vehicle over time becomes the same as, or similar to, that of the other vehicles.

FIG. 5 is a schematic diagram of a computer system 500 for implementing examples disclosed herein. The computer system 500 is adapted to execute instructions from a computer-readable medium to perform these and/or any of the functions or processing described herein. The computer system 500 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 500 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 500 may comprise at least one computing device or electronic device capable of including firmware, hardware, and/or executing software instructions to implement the functionality described herein. The computer system 500 may include processing circuitry 502 (e.g., processing circuitry including one or more processor devices or control units), a memory 504, and a system bus 506. The computer system 500 may include at least one computing device having the processing circuitry 502. The system bus 506 provides an interface for system components including, but not limited to, the memory 504 and the processing circuitry 502. The processing circuitry 502 may include any number of hardware components for conducting data or signal processing or for executing computer code stored in memory 504. The processing circuitry 502 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 502 may further include computer executable code that controls operation of the programmable device.

The system bus 506 may be any of several types of bus structures that may further interconnect to a memory bus (with or without a memory controller), a peripheral bus, and/or a local bus using any of a variety of bus architectures. The memory 504 may be one or more devices for storing data and/or computer code for completing or facilitating methods described herein. The memory 504 may include database components, object code components, script components, or other types of information structure for supporting the various activities herein. Any distributed or local memory device may be utilized with the systems and methods of this description. The memory 504 may be communicably connected to the processing circuitry 502 (e.g., via a circuit or any other wired, wireless, or network connection) and may include computer code for executing one or more processes described herein. The memory 504 may include non-volatile memory 508 (e.g., read-only memory (ROM), erasable programmable read-only memory (EPROM), electrically erasable programmable read-only memory (EEPROM), etc.), and volatile memory 510 (e.g., random-access memory (RAM)), or any other medium which can be used to carry or store desired program code in the form of machine-executable instructions or data structures and which can be accessed by a computer or other machine with processing circuitry 502. A basic input/output system (BIOS) 512 may be stored in the non-volatile memory 508 and can include the basic routines that help to transfer information between elements within the computer system 500.

The computer system 500 may further include or be coupled to a non-transitory computer-readable storage medium such as the storage device 514, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 514 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 514 and/or in the volatile memory 510, which may include an operating system 516 and/or one or more program modules 518. All or a portion of the examples disclosed herein may be implemented as a computer program 520 stored on a transitory or non-transitory computer-usable or computer-readable storage medium (e.g., single medium or multiple media), such as the storage device 514, which includes complex programming instructions (e.g., complex computer-readable program code) to cause the processing circuitry 502 to carry out actions described herein. Thus, the computer-readable program code of the computer program 520 can comprise software instructions for implementing the functionality of the examples described herein when executed by the processing circuitry 502. In some examples, the storage device 514 may be a computer program product (e.g., readable storage medium) storing the computer program 520 thereon, where at least a portion of a computer program 520 may be loadable (e.g., into a processor) for implementing the functionality of the examples described herein when executed by the processing circuitry 502. The processing circuitry 502 may serve as a controller or control system for the computer system 500 that is to implement the functionality described herein.

The computer system 500 may include an input device interface 522 configured to receive input and selections to be communicated to the computer system 500 when executing instructions, such as from a keyboard, mouse, touch-sensitive surface, etc. Such input devices may be connected to the processing circuitry 502 through the input device

interface 522 coupled to the system bus 506 but can be connected through other interfaces, such as a parallel port, an Institute of Electrical and Electronic Engineers (IEEE) 1394 serial port, a Universal Serial Bus (USB) port, an IR interface, and the like. The computer system 500 may include an output device interface 524 configured to forward output, such as to a display, a video display unit (e.g., a liquid crystal display (LCD) or a cathode ray tube (CRT)). The computer system 500 may include a communications interface 526 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

In summary of all of the above, the present disclosure provides a solution of how to obtain a more even ESS/battery degradation among fleet electric vehicles over time. In particular, the present disclosure proposes a solution based on defining a limited number of categories, dividing the missions that are to be assigned into these categories, and then assigning the missions in a way such that over time, the vehicles will perform an equal (or at least more equal) number of missions of each category. It is necessarily so that each vehicle also perform a same number of missions in all categories, but at least such that e.g. all vehicles perform a same first number of missions in a first category, a same second number of missions in a second category, etc., as each category is assumed to represent missions that cause a somewhat similar degradation of the performing vehicle ESS, and as making all vehicles perform equal numbers as described herein will thus result in an even (or at least more even) degradation over time, as no vehicle will e.g. be performing only difficult missions while another vehicle performs only easy missions, etc. The envisaged solution allows to consume less processing power than if using e.g. more complex models, and is particularly useful if the vehicles of a fleet is of a same or approximately same vehicle type.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

The following is a non-exhaustive list of examples as envisaged herein:

Example 1. A computer system for automated assigning of transport missions to electric vehicles of a vehicle fleet, including processing circuitry configured to: - for each of a plurality of transport missions, obtain an expected degradation of an energy storage system, ESS, of a vehicle if completing the mission; - based on the obtained expected degradations, categorize each of the transport missions into one of several categories of different expected degradation; - for each vehicle and for each category, obtain an indication of a number) of missions belonging to the category and previously assigned to the vehicle, and based on said indications, assign the transport missions to the vehicles such that differences in numbers of missions of each category assigned to each vehicle, and/or in sums of expected degradations for all missions performed by each vehicle, are reduced or eliminated over time.

Example 2: The computer system of example 1, wherein a goal of the assignment includes, for each category, all vehicles performing, over time, a same number of missions in that category.

Example 3: The computer system of example 1 or 2, wherein to estimate at least one of the expected degradations includes to estimate a required energy and one or more power requirements for the corresponding at least one mission to be assigned.

Example 4: The computer system of example 3, wherein to estimate said at least one of the expected degradations further includes to estimate at least one of a maximum power requirement and power requirements at specific state-of-charge, SoC, -levels [SoC], for the corresponding at least one mission to be assigned.

Example 5: The computer system of any one of examples 1 to 4, wherein to estimate at least one of the expected degradations includes to use statistical data of one or more vehicles having already completed one or more missions same or similar to the corresponding at least one mission to be assigned.

Example 6: The computer system of 5, wherein the statistical data includes at least a required energy to complete said one or more same or similar missions.

Example 7: The computer system of example 6, wherein the statistical data further includes historical weather conditions during completion of said one or more same or similar missions, and wherein the processing circuitry is further configured to obtain an indication of present or expected weather conditions for at least one of the missions to be assigned, and to obtain the expected degradation of said at least one mission based on the historical weather conditions and the present or expected weather conditions.

Example 8: The computer system of any one of the preceding examples, wherein the vehicles of the fleet are of same or similar vehicle types.

Example 9: The computer system of any one of the preceding examples, wherein to estimate at least one of the expected degradations includes to use one or more physical models of the vehicles.

Example 10: The computer system of any one of the preceding examples, wherein to estimate at least one of the expected degradations includes to use one or more models of the batteries of the vehicles.

Example 11: The computer system of any one of the preceding examples, wherein the vehicle fleet is a fleet of autonomous electric vehicles, AEVs.

Example 12: A computer-implemented method for automated assigning of transport missions to electric vehicles of a vehicle fleet, the method being performed by processing circuitry of a computer system, wherein the method includes: - for each of a plurality of transport missions, obtaining, by the processing circuitry, an expected degradation of an energy storage system, ESS, of a vehicle if completing the mission; - based on the obtained expected degradations, categorizing, by the processing circuitry, each of the transport missions into one of several categories of different expected degradation; - for each vehicle and for each category, obtaining, by the processing circuitry, an indication of a number of missions belonging to the category and previously assigned to the vehicle, and based on said indications, assigning, by the processing circuitry, the transport missions to the vehicles such that differences in numbers of missions of each category assigned to each vehicle, and/or in sums of expected degradations for all missions performed by each vehicle, are reduced or eliminated over time.

Example 13: An electric vehicle, including the computer system of any one of examples 1 to 11.

Example 14: The vehicle of example 13, wherein the vehicle is an autonomous electric vehicle, AEV.

Example 15: A fleet of electric vehicles, including the computer system of any one of examples 1 to 11 and the electric vehicles.

Example 16: The fleet of example 15, wherein at least one of the electric vehicles is an autonomous electric vehicle, AEV.

Example 17: The fleet of example 15 or 16, wherein the computer system is provided as part of one of the electric vehicles.

Example 18: The fleet of example 15 or 16, wherein the computer system is distributed among two or more of the electric vehicles.

Example 19. A computer program product including program code for performing, when executed by the processing circuitry, the method of example 12.

Example 20. A non-transitory computer-readable storage medium including instructions which, when executed by the processing circuitry, cause the processing circuitry to perform the method of example 12.

**Claims**

1. A computer system (100, 410, 412, 500) for automated assigning of transport missions to electric vehicles of a vehicle fleet (130), comprising processing circuitry (110, 502) configured to:

   - for each (120-i) of a plurality of transport missions (120), obtain an expected degradation ($\Delta SoH_i$) of an energy storage system, ESS, (132-j) of a vehicle (130-j) if completing the mission;
   - based on the obtained expected degradations, categorize each of the transport missions into one of several categories ($C_i \in \{C_1, C_2, ..., C_K\}$) of different expected degradation;
   - for each vehicle and for each category ($C_k$), obtain an indication of a number ($M_{n,k}$) of missions belonging to the category and previously assigned to the vehicle, and
   - based on said indications, assign the transport missions to the vehicles such that differences in numbers of missions of each category assigned to each vehicle, and/or in sums of expected degradations for all missions performed by each vehicle, are reduced or eliminated over time.

2. The computer system of claim 1, wherein the processing circuitry is configured to assign the transport missions such that, to the extent possible and for each category ($C_k$), all vehicles of the vehicle fleet performs, over time, an equal number ($M_k$) of missions in that category, or missions corresponding to a same total sum of expected degradation.

**3.** The computer system of claim 1 or 2, wherein the processing circuitry is configured to estimate at least one of the expected degradations by estimating a required energy ($E_{est,i}$) and one or more power requirements ($P_{est,i}$) for the at least one mission to be assigned.

**4.** The computer system of claim 3, wherein to estimate said at least one of the expected degradations further comprises to estimate at least one of a maximum power requirement $P_{estmax,i}$ and power requirements at specific state-of-charge, SoC, -levels ($P_{est,i}[SoC]$), for the at least one mission to be assigned.

**5.** The computer system of any one of claims 1 to 4, wherein to estimate at least one of the expected degradations comprises to use statistical data (150) collected for one or more vehicles having already completed one or more missions identical or similar to the at least one mission to be assigned.

**6.** The computer system of 5, wherein the statistical data comprises at least a required energy ($E_{req,i}$) to complete said one or more same or similar missions.

**7.** The computer system of claim 6, wherein the statistical data further comprises historical weather conditions during completion of said one or more same or similar missions, and wherein the processing circuitry is further configured to obtain an indication of present or expected weather conditions (160) for at least one of the missions to be assigned, and to obtain the expected degradation of said at least one mission based on the historical weather conditions and the present or expected weather conditions.

**8.** The computer system of any one of the preceding claims, wherein to estimate at least one of the expected degradations comprises to use one or more physical models of the vehicles.

**9.** The computer system of any one of the preceding claims, wherein to estimate at least one of the expected degradations comprises to use one or more models of the batteries of the vehicles.

**10.** The computer system of any one of the preceding claims, wherein the vehicle fleet is a fleet of autonomous electric vehicles, AEVs (130-1).

**11.** A computer-implemented method (200) for automated assigning of transport missions to electric vehicles of a vehicle fleet, the method being performed by processing circuitry (110, 502) of a computer system (100, 410, 412, 500), wherein the method comprises:

- for each of a plurality of transport missions, obtaining (S210), by the processing circuitry, an expected degradation of an energy storage system, ESS, of a vehicle if completing the mission;
- based on the obtained expected degradations, categorizing (S220), by the processing circuitry, each of the transport missions into one of several categories of different expected degradation;
- for each vehicle and for each category, obtaining (S230), by the processing circuitry, an indication of a number of missions belonging to the category and previously assigned to the vehicle, and
- based on said indications, assigning (S240), by the processing circuitry, the transport missions to the vehicles such that differences in numbers of missions of each category assigned to each vehicle, and/or in sums of expected degradations for all missions performed by each vehicle, are reduced or eliminated over time.

**12.** A fleet (400, 401) of electric vehicles, comprising the computer system (100, 410, 412) of any one of claims 1 to 10 and the electric vehicles (420).

**13.** The fleet of claim 12, wherein at least one of the electric vehicles is an autonomous electric vehicle, AEV.

**14.** A computer program product (514) comprising program code for performing, when executed by the processing circuitry (110, 502), the method (200) of claim 11.

**15.** A non-transitory computer-readable storage medium (514) comprising instructions which, when executed by the processing circuitry (110, 502), cause the processing circuitry to perform the method (200) of claim 11.

**Fig. 1**

**Fig. 2**

**Fig. 3**

400

410

420-2

420-2

410

420-1

420-n

420-N

*Fig. 4A*

401

420-2

420-2

412-2

412-2

420-1 412-1

420-n

420-N

412-n

412-N

*Fig. 4B*

500

504

508

510

512

502

516

518

506

514

522

524

526

520

*Fig. 5*

## EUROPEAN SEARCH REPORT

**Application Number**

EP 24 21 4755

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/234469 A1 (JOBSON EDWARD [SE] ET AL) 28 July 2022 (2022-07-28) | 1,3,9, 11,12, 14,15 | INV. G06Q10/0631 B60L58/12 |
| Y | * paragraph [0019] - paragraph [0087] * | 2,4-8, 10,13 | B60L58/16 G06Q10/08 G06Q10/20 |
| Y | US 2024/127137 A1 (SALTER STUART C [US] ET AL) 18 April 2024 (2024-04-18) | 2,5-8, 10,13 | G06Q50/40 H02J7/00 |
| A | * paragraph [0010] - paragraph [0043] * | 1,3,4,9, 11,12, 14,15 | ADD. G06F119/06 |
| Y | WO 2023/186377 A2 (VOLVO TRUCK CORP [SE]) 5 October 2023 (2023-10-05) | 4 | |
| A | * paragraph [0008] - paragraph [0125] * | 1-3,5-15 | |

TECHNICAL FIELDS
SEARCHED       (IPC)

G06Q
B60L
H02J
G06F

The present search report has been drawn up for all claims

| Place of search | Date of completion of the search | Examiner |
|---|---|---|
| The Hague | 4 February 2025 | Mas Tur, Elena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 4755

This annex lists the patent family members relating to the patent documents cited in the above-mentioned European search report.
The members are as contained in the European Patent Office EDP file on
The European Patent Office is in no way liable for these particulars which are merely given for the purpose of information.

04-02-2025

| Patent document cited in search report | Publication date | Patent family member(s) | | Publication date |
|---|---|---|---|---|
| US 2022234469 A1 | 28-07-2022 | CN | 114096434 A | 25-02-2022 |
| | | EP | 3994028 A1 | 11-05-2022 |
| | | US | 2022234469 A1 | 28-07-2022 |
| | | WO | 2021001013 A1 | 07-01-2021 |
| US 2024127137 A1 | 18-04-2024 | CN | 117893189 A | 16-04-2024 |
| | | DE | 102023127498 A1 | 18-04-2024 |
| | | US | 2024127137 A1 | 18-04-2024 |
| WO 2023186377 A2 | 05-10-2023 | CN | 119072419 A | 03-12-2024 |
| | | EP | 4500608 A2 | 05-02-2025 |
| | | WO | 2023186377 A2 | 05-10-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PROBIR KUMAR ROY et al.** A Critical Review on Battery Aging and State Estimation Technologies of Lithium-Ion Batteries: Prospects and Issues. *Electronics*, 2023, vol. 12 (19), 4105, https://doi.org/10.3390/electronics12194105